# EUROPÄISCHE PATENTSCHRIFT

(11) **EP 1 866 185 B1**
(45) Veröffentlichungstag und Bekanntmachung des Hinweises auf die Patenterteilung: **16.05.2012**
(21) Anmeldenummer: 06724090.3
(22) Anmeldetag: 06.04.2006
(51) Int. Cl.: B60Q 1/076, B60Q 1/12, B60Q 1/068

(54) **SCHEINWERFER FÜR FAHRZEUGE**
HEADLIGHT FOR VEHICLES
BLOC OPTIQUE POUR VÉHICULES À MOTEUR

(30) Priorität: 07.04.2005 DE 102005015937
(43) Veröffentlichungstag der Anmeldung: 19.12.2007
(73) Patentinhaber: Hella KGaA Hueck & Co., 59552 Lippstadt (DE)
(72) Erfinder: BRUMMEL, Reinhold, 59609 Anröchte (DE); DIKAU, Reinhard, 33104 Paderborn (DE); KORFF, Detlef, 59557 Lippstadt (DE); PLOTZITZKA, Jörg, 59558 Lippstadt (DE); BÜCHNER, Arnd-Claus, 59555 Lippstadt (DE)
(86) Internationale Anmeldenummer: PCT/EP2006/003145
(87) Internationale Veröffentlichungsnummer: WO 2006/105969

(56) Entgegenhaltungen:
- DE-A1- 10 217 191
- DE-A1- 10 248 445
- FR-A- 2 836 875
- US-A1- 2004 114 389

## Beschreibung

Die Erfindung betrifft einen Scheinwerfer für Fahrzeuge nach dem Oberbegriff des Patentanspruchs 1.

Aus der DE 103 25 331 A1 ist ein Scheinwerfer für Fahrzeuge bekannt, der zum einen einen Verstellrahmen aufweist, an dem eine Lichteinheit mit einer Lichtquelle und einem Reflektor befestigt ist. Der Verstellrahmen ist mittels einer Stelleinheit um eine erste Schwenkachse in einem Tragrahmen schwenkbar gelagert. Der Tragrahmen ist in axialer Richtung beabstandet zu dem Verstellrahmen angeordnet und ist seinerseits über Stellmittel um eine zweite Schwenkachse, die vorzugsweise senkrecht zur ersten Schwenkachse verläuft, schwenkbar an einem Gehäuse des Scheinwerfers bzw. einem Karosserieteil des Fahrzeugs befestigt. Zum Verschwenken des Verstellrahmens ist die Stelleinheit in Lichtaustrittsrichtung unter Bildung eines Abstandes hinter dem Tragrahmen angeordnet. Nachteilig an dem bekannten Scheinwerfer ist, dass der Scheinwerfer durch die ausladende Anordnung der Stelleinheit einen relativ großen Bauraumbedarf benötigt.

Aus der DE 103 39 183 A1 ist ein Scheinwerfer für Fahrzeuge bekannt, bei dem eine Lichteinheit an einem Verstellrahmen gelagert ist, der in Lichtaustrittsrichtung hinter einem Tragrahmen angeordnet ist. Der Verstellrahmen ist über eine Stelleinheit um eine erste Schwenkachse schwenkbar an dem Tragrahmen gelagert. Der Tragrahmen ist über Stellmittel um eine zweite Schwenkachse, die zu der ersten Schwenkachse senkrecht angeordnet ist, schwenkbar gelagert. Die Stelleinheit weist ein quer zur optischen Achse verschiebbares Stellelement auf. Die Stelleinheit ist über eine Verbindungsplatte an einer der Lichtaustrittsseite abgewandten Seite des Tragrahmens befestigt. Nachteilig hieran ist, dass zur bauraumoptimierten Positionierung der Stelleinheit ein relativ großer Montageaufwand erforderlich ist.

Aus der US 2004/0114389 A1 ist ein Scheinwerfer für Fahrzeuge mit einer Lichteinheit bekannt. Ein Verstellrahmen, der zur Halterung einer Linse der Lichteinheit vorgesehen ist, ist an einem Tragrahmen um eine erste Schwenkachse schwenkbar gelagert. Der Tragrahmen selbst ist über Stellmittel um eine weitere zweite Schwenkachse schwenkbar an einem Gehäuse des Scheinwer fers gelagert. An einem äußeren Umfangsrand des Tragrahmens ist eine plattenförmige Stelleinheitaufnahme angeformt, an der eine Stelleinheit zum Verschwenken des Verstellrahmens befestigt ist. Zur Befestigung der Stelleinheit an der plattenförmigen Stelleinheitaufnahme weist die Stelleinheit seitliche Zungen mit Bohrungen auf, in die Schrauben jeweils eingreifen und in Gewindeeingriff bringbar sind mit Gewindelöchern der plattenförmigen Stelleinheitaufnahme.

Aufgabe der vorliegenden Erfindung ist es daher, einen Scheinwerfer für Fahrzeuge derart weiterzubilden, dass mit relativ geringem Fertigungsaufwand eine platzsparende Anordnung einer Stelleinheit zum Verschwenken eines Rahmens gewährleistet ist, wobei die Stelleinheit insbesondere gegen Verschmutzung geschützt ist.

Zur Lösung dieser Aufgabe weist die Erfindung die Merkmale des Patenanspruchs 1 auf.

Der besondere Vorteil der Erfindung besteht darin, dass durch das Vorsehen einer Stelleinheitaufnahme an einer Außenseite des Tragrahmens eine definierte und bauraumoptimierte Lagerung der Stelleinheit in Bezug zu dem Tragrahmen bzw. der Lichteinheit ermöglicht wird. Nach der Erfindung ist die Stelleinheitaufnahme an einem äußeren Umfangsrand des Tragrahmens angeformt, wobei die Stelleinheit in definierter Weise bei der Montage des Scheinwerfers in eine Vertiefung der Stelleinheitaufnahme eingesetzt und mittels einer Abdeckplatte verschlossen ist. Vorteilhaft ist die Stelleinheit hierdurch gegen Verschmutzung geschützt. Ferner kann die Abdeckplatte eine abschirmende Wirkung hinsichtlich elektronischer Bauteile der Stelleinheit haben.

Nach einer Weiterbildung der Erfindung erstreckt sich die Stelleinheitaufnahme bereichsweise in einer Randebene des Tragrahmens, so dass die Stelleinheit relativ nah zu einer Mittelebene des Tragrahmens angeordnet sein kann. Hierdurch kann eine besonders Platz sparende Bauweise erzielt werden.

Nach einer Weiterbildung der Erfindung ist die Stelleinheitaufnahme an einer Oberseite oder Unterseite des Umfangsrandes des Tragrahmens angeordnet. Vorteilhaft können Platz sparend mehrere Lichteinheiten benachbart zueinander angeordnet sein. Ferner lässt sich hierdurch eine aufbauende Montage von Stelleinheitbauteilen, Abdeckplatte und Verstellrahmen realisieren, wobei die Montage aus lediglich einer Richtung erfolgen kann.

Nach einer Weiterbildung der Erfindung ist der Verstellrahmen über eine Lagerbolzen drehbar mit dem Tragrahmen verbunden. Hierdurch wird eine relativ kostengünstige, exakte und reibungsarme Lagerung ermöglicht.

Nach einer Weiterbildung der Erfindung ist der Verstellrahmen über ein Kugellager und ein mit demselben zusammenwirkenden Sicherungselement, das in Eingriff mit einem drehfest mit dem Verstellrahmen verbundenen Gewindeteil steht, drehbar mit dem Tragrahmen verbunden. Vorteilhaft kann hierdurch zum einen eine exakte Lagerung und zum anderen stabile Befestigung des Verstellrahmens am Tragrahmen gewährleistet sein.

Nach einer Weiterbildung der Erfindung verfügt der Tragrahmen über Befestigungsmittel, so dass ein Kabel der Zündeinheit des Scheinwerfers gehaltert werden kann, so dass ein Verschwenken der Lichteinheit sicher erfolgen kann und die Montage einfach und schnell durchführbar ist.

Ausführungsbeispiele der Erfindung werden nachfolgend anhand der Zeichnungen näher erläutert.

Es zeigen:
- Figur 1: eine perspektivische Ansicht eines Scheinwerfers von hinten mit einem Tragrahmen und einem Verstellrahmen, an dem eine Lichteinheit montiert ist,
- Figur 2: eine perspektivischen Ansicht des Tragrahmens von unten mit einer taschenförmigen Stelleinheitaufnahme, an die eine Stelleinheit ansetzbar ist,
- Figur 3: eine perspektivische Darstellung des mit dem Verstellrahmen verbundenen Tragrahmens vor Einbau der Lichteinheit von hinten,
- Figur 4: einen Vertikalschnitt durch eine Tragrahmen/Verstellrahmen-Einheit und
- Figur 5: eine perspektivische Rückansicht eines Scheinwerfers mit einem alternativen Tragrahmen und Befestigungsmittel für ein Zündkabel.

Ein Scheinwerfer 1 für Fahrzeuge besteht zum einen aus einem Verstellrahmen 2, der mittels einer Stelleinheit 3 um eine erste Schwenkachse (Vertikalachse V) verschwenkbar an einem Tragrahmen 5 gelagert ist. Hierdurch kann eine an dem Verstellrahmen 2 befestigte Lichteinheit 6 beispielsweise zur Bildung eines Kurvenlichtes bewegt werden.

Die Lichteinheit 6 ist nach dem vorliegenden Ausführungsbeispiel als Projektions-Lichteinheit ausgebildet mit einem Reflektor 7, in dessen erstem Brennpunkt eine Lichtquelle und in dessen zweitem Brennpunkt eine Blende angeordnet ist. In Lichtaustrittsrichtung 8 vor dem Reflektor 7 ist ein Linsenhalter 9 vorgesehen, an dem eine Linse 10 in herkömmlicher Weise befestigt ist.

Zur Verstellung der Lichteinheit 6 um eine zweite Schwenkachse (Horizontalachse H) ist der Tragrahmen 5 durch nicht dargestellte Stellmittel in üblicher Weise schwenkbar an einem nicht dargestellten Gehäuse des Scheinwerfers 1 gelagert.

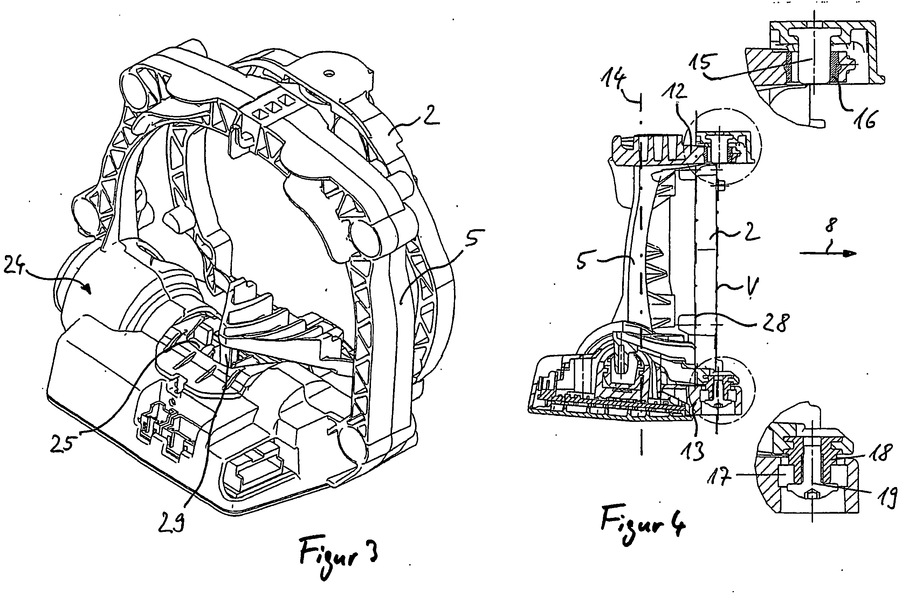

Der Tragrahmen 5 ist in Lichtaustrittsrichtung 8 hinter dem Verstellrahmen 2 angeordnet, wobei der Tragrahmen 5 über einen oberen und unteren Ausleger 12 bzw. 13 verfügt, die jeweils in Lichtaustrittsrichtung 8 von dem Tragrahmen 5 abragen und eine Lagerung des Verstellrahmens 2 in Lichtaustrittsrichtung 8 vor einer Mittelebene 14 des Tragrahmens 5 bewirken. Hierzu ist, wie aus Figur 4 ersichtlich ist, an dem oberen Ausleger 12 eine Lagerbolzen 15 im Verstellrahmen 2 befestigt, die drehbar in einer Bohrung 16 des oberen Auslegers 12 gelagert ist. An dem unteren Ausleger 13 ist ein Kugellager 17 vorgesehen, mit dem ein in Richtung der ersten Schwenkachse V ausgerichtetes Gewindeteil 18 des Verstellrahmens 2 und ein in Richtung der ersten Schwenkachse V orientiertes Sicherungselement 19 gelagert ist. Das Sicherungselement 19 ist als Schraubbolzen mit einem abschließenden Kopf ausgebildet, der in Schraubeingriff mit dem Gewindeteil 18 steht. Das Gewindeteil 18 ist zusammen mit dem Sicherungselement 19 drehbar an dem Kugellager 17 des unteren Auslegers 13 gelagert. Das Sicherungselement 19 ermöglicht eine Festlegung des Verstellrahmens 12 in Richtung der ersten Schwenkachse V im unteren Bereich des Tragrahmens 5. Die Symmetrieachse der Lagerbolzen 15 einerseits und des Gewindeteils 18 bzw. des Sicherungselementes 19 andererseits liegen in vertikaler Richtung übereinander und bestimmen die erste Schwenkachse V.

Die Stelleinheit 3 ist in einer Stelleinheitaufnahme 20 des Tragrahmens 5 gelagert, die sich in einem unteren Randbereich des Tragrahmens 5 auf einer der Symmetrieachse S des Tragrahmens 5 abgewandten Außenseite 22 anschließt. Die Stelleinheitaufnahme 20 ist an einem Umfangsrand des Tragrahmens 5 angeformt und weist eine Vertiefung 23 auf, in die ein Stellmotor 24 zusammen mit einem Stellglied 25 sowie gegebenenfalls elektronischen Bauteilen eingesetzt werden kann. Im montierten Zustand der Stelleinheit 3 ist die Stelleinheitaufnahme 20 durch eine Abdeckplatte 26 abgeschlossen. Die Befestigung der Abdeckplatte 26 kann mittels Verschraubung 27 an der Stelleinheitaufnahme 20 erfolgen.

Wie aus Figur 4 deutlich wird, erstreckt sich die Stelleinheitaufnahme 20 bzw. die Stelleinheit 3 bereichsweise in der Mittelebene 14 des Tragrahmens 5. Die erste Schwenkachse V ist in Lichtaustrittsrichtung 8 vor der Mittelebene 14 angeordnet. Die erste Schwenkachse V ist dabei einer vorderen Randebene 28 des Tragrahmens 5 vorgelagert. Von der Stelleinheitaufnahme 20 kann der untere Ausleger 13 in Lichtaustrittsrichtung 8 abragen. Die Stelleinheitaufnahme 20 bildet somit neben einem stabilisierenden Sockel für den Tragrahmen 5 eine Anlenkung desselben an den Verstellrahmen 2.

Auf einer dem Tragrahmen 5 zugewandten unteren Seite weist der Verstellrahmen 2 ein Eingriffsteil 29 auf, das in eine nicht dargestellte Ausnehmung des linear verschieblichen Stellgliedes 25 der Stelleinheit 3 eingreift. Hierdurch ist eine Anlenkung zur Verstellung des Verstellrahmens 2 in horizontaler Richtung gegeben.

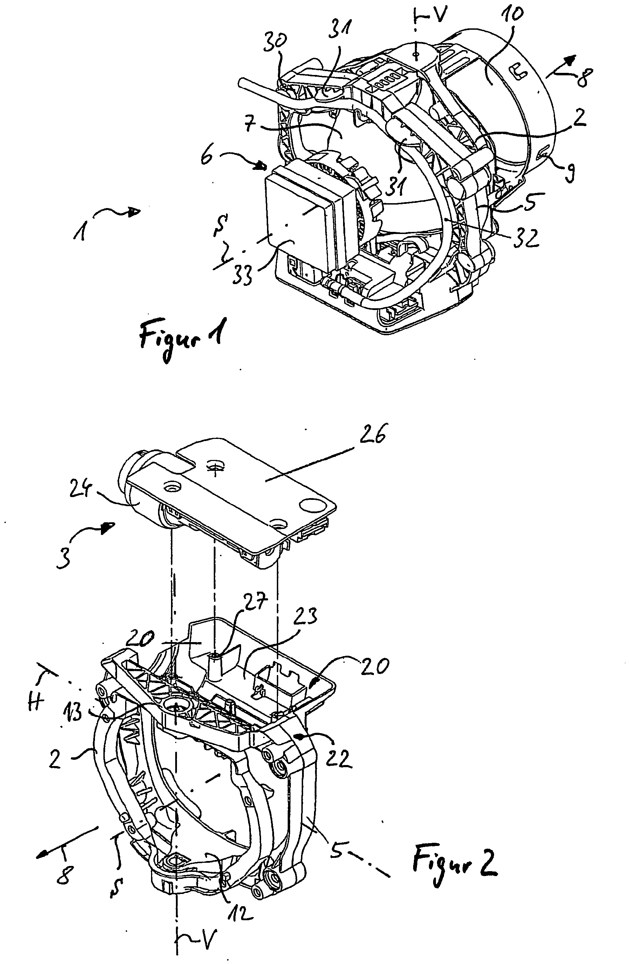

Wie aus Figur 1 ersichtlich ist, weist der Tragrahmen 5 auf einer Rückseite 30 klammerförmige Befestigungsmittel 31 auf, an dem ein Zündkabel 32 für eine Zündeinheit 33 befestigt ist. Die Zündeinheit 33 dient zur Zündung der als Gasentladungslampe ausgebildeten Lichtquelle. Das klammerförmige Befestigungsmittel 21 ist ortsabhängig an der Rückseite des Tragrahmens 5 angeformt.

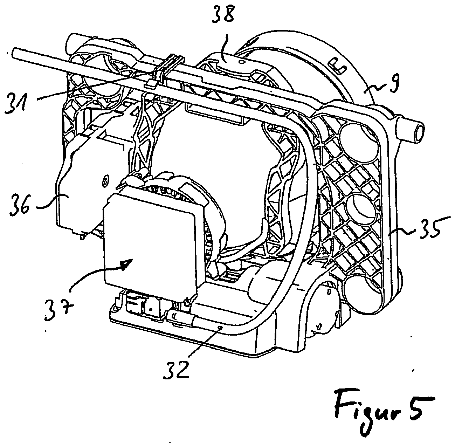

Nach einer zweiten Ausführungsform des Scheinwerfers gemäß Figur 5 kann ein Tragrahmen 35 in horizontaler Richtung verbreitert ausgebildet sein. Hierdurch können innerhalb des Tragrahmens 35 weitere Stellmittel 36 für die Verstellung einer als Walze ausgebildeten Blende der Lichteinheit 37 angeordnet sein, die unmittelbar an einem Verstellrahmen 38 befestigt sind. Die Bauteile der zweiten Ausführungsform, die mit der ersten Ausführungsform übereinstimmen, sind mit den gleichen Bezugsziffern versehen.

Das Zündkabel 32 ist an der Rückseite des Tragrahmens 35 ortsunabhängig über ein rastendes Befestigungsmittel 31 mit dem Tragrahmen 35 verbunden. Das rastende Befestigungsmittel 31 ist rastend mit dem Tragrahmen 35 einerseits und rastend mit dem Zündkabel 32 verbunden.

## Patentansprüche

1. Scheinwerfer für Fahrzeuge mit einer Lichteinheit (6) enthaltend eine Lichtquelle und einen Reflektor (7), wobei die Lichteinheit (6) in einem Verstellrahmen (2) gelagert ist, der mittels einer Stelleinheit (3) um eine erste Schwenkachse (V) schwenkbar an einem Tragrahmen (5, 35) gelagert ist, wobei der Tragrahmen (5, 35) über Stellmittel um eine zweite Schwenkachse (H) schwenkbar an einem Gehäuse des Scheinwerfers gelagert ist, wobei der Tragrahmen (5, 35) auf einer der Symmetrieachse (S) desselben abgewandten Außenseite eine Stelleinheitaufnahme (20) aufweist, die an einem äußeren Umfangsrand des Tragrahmens (5, 35) angeformt ist, **dadurch gekennzeichnet, dass** die Stelleinheitaufnahme (20) des Tragrahmens (5, 35) eine Vertiefung (23) aufweist, in die die Stelleinheit (3) eingesetzt ist, und dass die Vertiefung (23) durch eine Abdeckplatte (26) abgeschlossen ist.

2. Scheinwerfer nach Anspruch 1, **dadurch gekennzeichnet, dass** die Stelleinheitaufnahme (20) an einer Oberseite oder Unterseite des Umfangsrandes des Tragrahmens (5, 35) angeordnet ist.

3. Scheinwerfer nach Anspruch 1 oder 2, **dadurch gekennzeichnet, dass** die Stelleinheit (3) zumindest bereichsweise in einer Randebene (28) des Tragrahmens (5, 35) verläuft.

4. Scheinwerfer nach einem der Ansprüche 1 bis 3, **dadurch gekennzeichnet, dass** der Verstellrahmen (2) über Ausleger (12, 13) mit dem Tragrahmen (5, 35) verbunden ist, derart, dass die erste Schwenkachse (V) einer vorderen Randebene (28) des Tragrahmens (5, 35) vorgelagert ist.

5. Scheinwerfer nach einem der Ansprüche 1 bis 4, **dadurch gekennzeichnet, dass** ein Stellglied (25) der Stelleinheit (3) in einer Mittelebene (14) des Tragrahmens (5, 35) oder in Lichtaustrittsrichtung (8) hinter der Mittelebene (14) des Tragrahmens (5, 35) an einem Ausleger (12, 13) des Verstellrahmens (2) angreift.

6. Scheinwerfer nach einem der Ansprüche 1 bis 5, **dadurch gekennzeichnet, dass** der Verstellrahmen (2) über eine in demselben festgelegte Lagerbolzen (15) drehbar mit dem Tragrahmen (5, 35) verbunden ist.

7. Scheinwerfer nach einem der Ansprüche 1 bis 6, **dadurch gekennzeichnet, dass** der Verstellrahmen (2) über ein Kugellager (17) und ein mit demselben zusammenwirkendes, in Richtung der ersten Verschwenkachse (V) verlaufendes Sicherungselement (19), das in Eingriff mit einem drehfest mit dem Verstellrahmen (2) verbundenes Gewindeteil (18) steht, drehbar mit dem Tragrahmen (5, 35) verbunden ist.

8. Scheinwerfer nach einem der Ansprüche 1 bis 7, **dadurch gekennzeichnet, dass** von dem Verstellrahmen (2) ein Eingriffsteil (29) abragt, das in eine Ausnehmung eines linear verschieblichen Stellgliedes (25) der Stelleinheit (3) eingreift.

9. Scheinwerfer nach einem der Ansprüche 1 bis 8, **dadurch gekennzeichnet, dass** der Tragrahmen (5, 35) über Befestigungsmittel (31) verfügt zur Befestigung eines Kabels (32) der Zündeinheit (33) des Scheinwerfers.

## Claims

1. Vehicle headlamp with a light unit (6) containing a light source and a reflector (7), wherein the light unit (6) is mounted in an adjustment frame (2) that is mounted on a carrier frame (5, 35) so that the adjustment frame can pivot about a first pivot axis (V) by means of an actuator (3), wherein the carrier frame (5, 35) is mounted on a housing of the headlamp so that the carrier frame can pivot about a second pivot axis (H) by means of actuating means, wherein the carrier frame (5, 35) has an actuator receptacle (20) on an outer side facing away from the axis of symmetry (S) of this carrier frame, wherein this actuator receptacle is integrally molded on an outer peripheral edge of the carrier frame (5, 35), **characterized in that** the actuator receptacle (20) of the carrier frame (5, 35) has a recess (23) in which the actuator (3) is inserted and that the recess (23) is closed by a cover plate (26).

2. Headlamp according to Claim 1, **characterized in that** the actuator receptacle (20) is arranged on the top side or bottom side of the peripheral edge of the carrier frame (5, 35).

3. Headlamp according to Claim 1 or 2, **characterized in that** the actuator (3) extends at least in some regions in a peripheral plane (28) of the carrier frame (5, 35).

4. Headlamp according to one of Claims 1 to 3, **characterized in that** the adjustment frame (2) is connected by means of extension arms (12, 13) to the carrier frame (5, 35) such that the first pivot axis (V) is situated in front of a front edge plane (28) of the carrier frame (5, 35).

5. Headlamp according to one of Claims 1 to 4, **characterized in that** an actuating element (25) of the actuator (3) engages an extension arm (12, 13) of the adjustment frame (2) in a center plane (14) of the carrier frame (5, 35) or behind the center plane (14) of the carrier frame (5, 35) in the direction of light emission (8).

6. Headlamp according to one of Claims 1 to 5, **characterized in that** the adjustment frame (2) is connected to the carrier frame (5, 35) so that the adjustment frame can rotate by means of a bearing pin (15) fixed in this adjustment frame.

7. Headlamp according to one of Claims 1 to 6, **characterized in that** the adjustment frame (2) is connected to the carrier frame (5, 35) so that the adjustment frame can rotate by means of a ball bearing (17) and a securing element (19) that interacts with this ball bearing and extends in the direction of the first pivot axis (V) and engages with a threaded part (18) locked in rotation with the adjustment frame (2).

8. Headlamp according to one of Claims 1 to 7, **characterized in that** an engagement part (29) projects from the adjustment frame (2), wherein this engagement part engages in a recess of a linear displaceable actuating element (25) of the actuator (3).

9. Headlamp according to one of Claims 1 to 8, **characterized in that** the carrier frame (5, 35) has fastening means (31) for fastening a cable (32) of the ignition unit (33) of the headlamp.

## Revendications

1. Projecteur pour véhicules automobiles avec une unité d'éclairage (6) contenant une source de lumière et un réflecteur (7), l'unité d'éclairage (6) étant montée dans un cadre de réglage (2) qui est monté de manière pivotante autour d'un premier axe de pivotement (V) sur un cadre support (5, 35) au moyen d'une unité de réglage (3), le cadre support (5, 35) étant monté de manière pivotante par des moyens de réglage autour d'un deuxième axe de pivotement (H) sur un boîtier du projecteur, le cadre support (5, 35) présentant un logement d'unité de réglage (20) sur un côté extérieur détourné de l'axe de symétrie (S) de celui-ci qui est formé sur un bord périphérique extérieur du cadre support (5, 35) **caractérisé en ce que**
le logement d'unité de réglage (20) du cadre support (5, 35) présente une cavité (23) dans laquelle l'unité de réglage (3) est introduite et que la cavité (23) est fermée par une plaque de recouvrement (26).

2. Projecteur selon la revendication 1, **caractérisé en ce que** le logement d'unité de réglage (20) est disposé sur un côté supérieur ou inférieur du bord périphérique du cadre support (5, 35).

3. Projecteur selon la revendication 1 ou 2, **caractérisé en ce que** l'unité de réglage (3) s'étend au moins partiellement au niveau d'un plan de bord (28) du cadre support (5, 35).

4. Projecteur selon l'une des revendications 1 à 3, **caractérisé en ce que** le cadre de réglage (2) est relié au cadre support (5, 35) par des potences (12, 13) de telle manière que le premier axe de pivotement (V) soit situé en amont à un plan de bord avant (28) du cadre support (5, 35).

5. Projecteur selon l'une des revendications 1 à 4, **caractérisé en ce qu'**un actionneur (25) de l'unité de réglage (3) attaque dans un plan moyen (14) du cadre support (5, 35) ou en direction de la sortie de lumière (8) derrière le plan moyen (14) du cadre support (5, 35) sur une potence (12, 13) du cadre de réglage (2).

6. Projecteur selon l'une des revendications 1 à 5, **caractérisé en ce que** le cadre de réglage (2) est relié de manière orientable au cadre support (5, 35) par un pivot (15) fixé dans celui-ci.

7. Projecteur selon l'une des revendications 1 à 6, **caractérisé en ce que** le cadre de réglage (2) est relié de manière orientable au cadre support (5, 35) au moyen d'un palier à billes (17) et d'un élément de sûreté (19) en interaction avec celui-ci s'étendant en direction du premier axe de pivotement (V) qui s'engrène avec une pièce filetée (18) reliée au cadre de réglage (2) de manière non rotative.

8. Projecteur selon l'une des revendications 1 à 7, **caractérisé en ce qu'**une pièce d'engrenage (29) se départit du cadre de réglage (2) qui s'engrène dans une échancrure d'un actionneur (25) linéairement déplaçable de l'unité de réglage (3).

9. Projecteur selon l'une des revendications 1 à 8, **caractérisé en ce que** le cadre support (5, 35) possède des moyens de fixation (31) pour fixer un câble (32) de l'unité d'allumage (33) du projecteur.
